Europäisches Patentamt
European Patent Office
Office européen des brevets

(19) (11) Veröffentlichungsnummer: **0 368 226 A2**

(12) **EUROPÄISCHE PATENTANMELDUNG**

(21) Anmeldenummer: **89120556.9**

(22) Anmeldetag: **07.11.89**

(51) Int. Cl.5: **C08F 220/12, C08F 212/04, C04B 24/26, //(C08F220/12, 212:04,220:38,220:58), (C08F212/04,220:12,220:38, 220:58)**

Patentansprüche für folgenden Vertragsstaat: ES.

(30) Priorität: **11.11.88 DE 3838294**

(43) Veröffentlichungstag der Anmeldung: **16.05.90 Patentblatt 90/20**

(84) Benannte Vertragsstaaten: **AT BE CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Franzmann, Gernot, Dr.**
**Im Woogtal 13**
**D-6719 Bobenheim(DE)**
Erfinder: **Schumacher, Karl-Heinz, Dr.**
**Wolfskeule 12**
**D-6730 Neustadt(DE)**
Erfinder: **Stanger, Bernd, Dr.**
**Habichtstrasse 18**
**D-6724 Dudenhofen(DE)**

(54) **Wässrige Kunsthartdispersionen.**

(57) Wäßrige Kunstharzdispersionen, die durch Emulsionspolymerisation von

a) 35 bis 90 Gew.% eines Esters aus einer $\alpha,\beta$-ethylenisch ungesättigten Carbonsäure mit bis zu 5 C-Atomen und einem $C_1$- bis $C_{12}$-Alkanol oder eines Gemisches solcher Ester (Monomere I),

b) 5 bis 60 Gew.% Styrol und/oder Vinyltoluolen (Monomere II),

c) 1 bis 5 Gew.% mindestens einer olefinisch ungesättigten Sulfonsäure der allgemeinen Formel III (Monomere III)

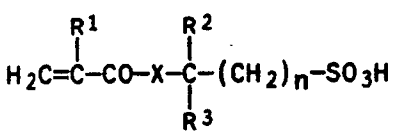 (III)

in der die Variablen folgende Bedeutung haben:
n 0 bis 10
$R^1$ bis $R^3$ Wasserstoff oder die Methylgruppe
x Sauerstoff oder die Iminogruppe
und

d) 0 bis 5 Gew.% sonstigen copolymerisierbaren Monomeren (Monomere IV), erhältlich sind, wobei die Gewichtsanteile der Monomeren I, II und IV innerhalb der angegebenen Grenzen so gewählt werden, daß ein nur aus diesen Monomeren aufgebautes Polymerisat eine Glastemperatur von -50 bis +20 °C aufweisen würde, das Verfahren zur Herstellung dieser Dispersionen sowie die Verwendung dieser Dispersionen als Zusatzmittel für mineralische Bindebaustoffe.

EP 0 368 226 A2

**Wäßrige Kunstharzdispersionen**

## Wäßrige Kunstharzhdispersionen

Die vorliegende Erfindung betrifft wäßrige Kunstharzdispersionen, erhältlich durch Emulsionspolymerisation von

a) 35 bis 90 Gew.% eines Esters aus einer α,β-ethylenisch ungesättigten Carbonsäure mit bis zu 5 C-Atomen und einem $C_1$- bis $C_{12}$-Alkanol oder eines Gemisches solcher Ester (Monomere I),

b) 5 bis 60 Gew.% Styrol und/oder Vinyltoluolen (Monomere II),

c) 1 bis 5 Gew.% mindestens einer olefinisch ungesättigten Sulfonsäure der allgemeinen Formel III (Monomere III)

$$H_2C=\overset{R^1}{\overset{|}{C}}-CO-X-\underset{R^3}{\underset{|}{\overset{R^2}{\overset{|}{C}}}}-(CH_2)_n-SO_3H \qquad (III)$$

in der die Variablen folgende Bedeutung haben:
n 0 bis 10
$R^1$ bis $R^3$ Wasserstoff oder die Methylgruppe
x Sauerstoff oder die Iminogruppe
und

d) 0 bis 5 Gew.% sonstigen copolymerisierbaren Monomeren (Monomere IV), wobei die Gewichtsanteile der Monomeren I, II und IV innerhalb der angegebenen Grenzen so gewählt sind, daß ein nur aus diesen Monomeren aufgebautes Polymerisat eine Glastemperatur von -50 bis +20 °C aufweisen würde.

Außerdem betrifft die Erfindung das Verfahren zur Herstellung dieser Dispersionen sowie die Verwendung dieser Dispersionen als Zusatzmittel für mineralische Bindebaustoffe.

Aus der DE-A 25 24 064 sind wäßrige Dispersionen von Copolymerisaten bekannt, die zu 0,1 bis 1,5 Gew.% aus einem der eingangs definierten Monomeren III, einem Ester der Acryl- oder Methacrylsäure sowie aus Vinylacetat oder Isobutylacrylat aufgebaut sind. Als weitere Comonomere werden auch Styrol und Vinyltoluol erwähnt. Diese Copolymerisate dienen als druckempfindliche Klebstoffe (Haftkleber) zum Verbinden flächiger Gebilde.

Die Lehre der DE-A-32 20 384 betrifft wäßrige Dispersionen von Copolymerisaten aus 90 bis 97,7 Gew.% Monomeren die keine Amid- oder Sulfogruppen enthalten, 0,5 bis 5 Gew.% von Monomeren mit einer Amidgruppe und 1,8 bis 5 Gew.% der vorstehend definierten Monomeren III. Speziell werden in dieser DE-A Copolymerisate auf Basis von 2-Ethylhexylacrylat, Acrylamid und Methacrylamid, der Monomeren III sowie einiger weiterer aliphatischer Monomeren beschrieben.

Diese Dispersionen werden als Zusatzmittel zu Zementmörteln empfohlen, um dem ausgehärteten Mörtel eine bessere Haftzugfestigkeit zu verleihen. Die anwendungstechnischen Eigenschaften dieser Dispersionen lassen jedoch zu wünschen übrig, indem die sie enthaltenden Zementmörtel einerseits ein verzögertes Erstarren aufweisen und andererseits hinsichtlich Haftfestigkeit sowie Festigkeit gegen dynamische Beanspruchungen nicht voll zu befriedigen vermögen.

Der vorliegenden Erfindung lag daher die Aufgabe zugrunde, den geschilderten Nachteilen mittels besser geeigneten Copolymerisat-Dispersionen abzuhelfen. Demgemäß wurden die eingangs definierten wäßrigen Kunstharzdispersionen gefunden.

Als Monomere I werden mit Vorteil Ester der Acrylsäure oder Methacrylsäure einpolymerisiert, die sich von 2 bis 8 C-Atome enthaltenden Alkanolen wie Ethanol, iso-Propanol, n- und iso-Butanol, n-Hexanol sowie 2-Ethylhexanol ableiten, wobei die Ester der Acrylsäure bevorzugt sind. Besonders bevorzugte Monomere I sind n-Butylacrylat, n-Hexylacrylat und 2-Ethylhexylacrylat.

Von den aromatischen Monomeren II wird mit besonderem Vorteil Styrol eingebaut. Als Monomere IV sind Vinylester von Alkansäuren mit 2 bis 6 Kohlenstoffatomen von Interesse, wobei Vinylacetat, Vinylpropionat und Vinylbutyrat bevorzugt sind. Beispiele für geeignete olefinisch ungesättigte Sulfonsäuren der allgemeinen Formel III (Monomere III) sind 2-Sulfoethylacrylat, 2-Sulfethylmethacrylat, 3-Sulfopropylacrylat und 3-Sulfopropylmethacrylat sowie 2-Acrylamido-ethansulfonsäure, 2-Methacrylamido-ethansulfonsäure, 2-Methacrylamido-2,2-dimethylethansulfonsäure, 2-Acrylamido-n-butansulfonsäure, 2-Methacrylamido-n-butansulfonsäure und 2-Methacrylamido-isobutansulfonsäure. Besonders geeignete Sulfonsäuren III sind die ω-Acrylamido-ω,ω-dimethylalkansulfonsäuren mit n = 1,2 oder 3, unter denen die 2-Acrylamido-2,2-dimethylethansulfonsäure ganz besonders bevorzugt ist. Die genannten Sulfonsäuren können sowohl in ihrer

Säureform als auch in Form ihrer Alkalimetall- oder Ammoniumsalze eingesetzt werden. Die Gewichtsanteile der Monomeren I, II, IV, bezogen auf die Gesamtmenge der zu polymerisierenden Monomeren, werden mit Hilfe der Beziehung von Fox so gewählt, daß ein nur aus diesen Monomeren aufgebautes Polymerisat eine Glastemperatur von -50 bis +20, bevorzugt -50 bis -20 °C, aufweisen würde, wobei der Gewichtsanteil der Monomeren 2 bevorzugt 15 bis 55 Gew.% beträgt. Nach Fox (T.G. Fox, Bull. Am. Phys. Soc. (Ser. II) 1, 123 [1956] gilt für die Glastemperatur von Mischpolymerisaten in guter Näherung:

$$\frac{1}{Tg} = \frac{X^1}{Tg^1} + \frac{X^2}{Tg^2} + \cdots\cdots \frac{X^n}{Tg^n}$$

wobei $X^1$, $X^2$ ......, $X^n$ die Massenbrüche der Monomeren 1, 2, ..., n und $Tg^1$, $Tg^2$, ......, $Tg^n$ die Glastemperaturen der jeweils nur aus einem der Monomeren 1, 2, ...... oder n aufgebauten Polymeren in Grad Kelvin bedeuten. Die Glastemperaturen dieser Homopolymerisate der oben aufgeführten Monomeren I, II und IV sind bekannt und z.B. in J. Brandrup, E.H. Immergut, Polymer Handbook 1st Ed. J. Wiley, New York 1966 und 2nd Ed. J. Wiley, New York 1975 aufgeführt.

Die Herstellung der erfindungsgemäßen Kunstharzdispersionen erfolgt durch Polymerisation der jeweiligen Monomeren in wäßrigem Medium unter den bekannten Bedingungen der Emulsionspolymerisation in Gegenwart von wasserlöslichen radikalbildenden Initiatoren und Emulgatoren sowie gegebenenfalls in Gegenwart von Schutzkolloiden und Reglern sowie weiterer Hilfsmittel.

Als wasserlösliche Polymerisationsinitiatoren kommen vor allem Peroxidisulfate wie Natriumperoxidisulfat oder kombinierte Systeme, die ein organisches Reduktionsmittel und ein Peroxid enthalten, z.B. Formaldehydnatriumsulfoxylat/Wasserstoffperoxid in Betracht. Als Emulgatoren haben sich insbesondere ethoxylierte Alkylphenole (EO-Grad: 3 bis 30, Alkylrest $C_8$ bis $C_{10}$) und/oder ethoxylierte Fettalkohole (EO-Grad: 5 bis 50, Alkylrest: $C_8$ bis $C_{25}$), die beide sulfatiert sein können, sowie deren Alkalimetallsalze bewährt.

Die Emulsionspolymerisationstemperatur beträgt üblicherweise 0 bis 100, vorzugsweise 20 bis 90 °C. Die Emulsionspolymerisation kann als Chargenprozeß oder in Form eines Zulaufverfahrens durchgeführt werden. Bevorzugt ist das Zulaufverfahren, bei dem man einen Teil des Polymerisationsansatzes vorlegt, auf die Polymerisationstemperatur erwärmt und anschließend den Rest in getrennten Zuläufen, von denen einer die Monomeren in reiner oder in emulgierter Form enthält, kontinuierlich zuführt. Die Zufuhr der Monomeren als wäßrige Emulsion wird bevorzugt. Nach beendeter Polymerisation stellt man die fertige Dispersion, deren Feststoffgehalt bevorzugt 40 bis 70 Gew.% beträgt, vorzugsweise auf pH 8 bis 9 ein. Das zahlenmittlere Molekulargewicht des dispergierten Polymerisates beträgt im allgemeinen $5 \cdot 10^3$ bis $5 \cdot 10^6$ bevorzugt $10^5$ bis $2 \cdot 10^6$.

Die erfindungsgemäßen Kunststoffdispersionen sind mit mineralischen Bindemitteln wie Zement, Kalk oder Gips gut verträglich und in vorteilhafter Weise als Zusatzmittel in mineralischen Bindebaustoffen anwendbar. Als mineralische Bindebaustoffe werden wäßrige Zubereitungen wie Mörtel oder Beton zusammengefaßt, die als wesentliche Bestandteile mineralische Bindemittel wie Zement, Kalk oder Gips sowie als Zuschläge dienende Sande, Kiese oder gebrochene Gesteine enthalten und nach dem Anmachen mit Wasser an der Luft, teilweise auch unter Wasser, erstarren und erhärten. Durch Zusatz der erfindungsgemäßen Kunstharzdispersionen werden Baustoffmassen erhalten, die nach dem Aushärten eine verbesserte Haftfestigkeit sowie eine erhöhte Festigkeit gegen dynamische Beanspruchungen, d.h. eine erhöhte Flexibilität aufweisen, und die beispielsweise als Fugenmassen, Straßenbelagsmassen, Reparaturmassen, Überzugsmassen, Zwischenschichten und Ausgleichschichten geeignet sind.

Die erfindungsgemäßen Kunstharzdispersionen eignen sich insbesondere als Zusatzmittel für Bindebaustoffe auf Zementbasis, wobei die Verträglichkeit weitgehend unabhängig von der Zementart ist. Je nach Bauvorhaben können beispielsweise Hochofenzement, Ölschieferzement, hydrophobierter Portlandzement, Schnellzement, Quellzement, Tonerdezement und besonders bevorzugt Portlandzement verwendet werden. Zur Herstellung eines dispersionshaltigen mineralischen Bindebaustoffes werden zweckmäßigerweise das mineralische Bindemittel und die als Zuschläge dienenden Sande, Kiese oder gebrochenen Gesteine trocken gemischt und anschließend unter Zugabe der wäßrigen Kunstharzdispersion sowie gegebenenfalls weiterer Hilfsmittel wie Entschäumern oder Verdickern angerührt. Bezogen auf die Menge des eingesetzten mineralischen Bindemittels beträgt die Menge des zugegebenen Kunstharzes, d.h. das Trockengewicht der zugegebenen wäßrigen Kunstharz dispersion, in der Regel 5 bis 80, bevorzugt 10 bis 70 Gew.%. Besonders vorteilhaft sind Baustoffzübereitungen deren Feststoffzusammensetzung im wesentlichen

60 bis 70 Gew.% Sand (arithmetisches Mittel der Korngrößtdurchmesser von 0,08 bis 4 mm)

15 bis 35 Gew.% Portlandzement und
2 bis 15 Gew.% einer erfindungsgemäßen Dispersion (berechnet als Trockengewicht) enthält.

Derartige Baustoffmassen sind insbesondere zur Ausbildung flexibler Beschichtungen geeignet und können im Rahmen der Gebäude- und Betonsanierung zur Rißüberbrückung als Überzugsmassen eingesetzt werden.

Beispiele

Beispiel 1

Herstellung der Dispersionen D1 und D2 sowie der Vergleichsdispersionen DV1 und DV2

Eine Lösung aus 255 g Wasser und 0,18 g Natriumperoxidisulfat wurde auf 85 °C erhitzt und anschließend innerhalb von 3 Stunden bei dieser Temperatur mit einer wäßrigen Emulsion aus
360 g Wasser
765 g Monomermischung
26 g ethoxyliertes (EO-Grad 25) p-Isooctylphenol und
18 g Na-Salz von ethoxyliertem (EO-Grad 25) und sulfatiertem p-Isooctylphenol
und dazu in einem separaten Zulauf mit einer Lösung von
3,4 g Natriumperoxidisulfat in
90 g Wasser
versetzt. Danach wurde die Polymerisation noch 1,5 h fortgesetzt. Die fertigen Dispersionen wurden mit einer 25 gew.%igen wäßrigen Ammoniaklösung auf pH 8 eingestellt. Die Zusammensetzung der Monomermischung, die ohne Berücksichtigung der 2-Acrylamido-2,2-dimethylethansulfonsäure für ein der jeweiligen Monomerzusammensetzung entsprechendes Mischpolymerisat nach Fox berechnete Glastemperatur und der Feststoffgehalt der Dispersionen 1 und 2 gehen aus Tabelle 1 hervor.

Die Vergleichsdispersionen DV 1 und DV 2 wurden gemäß den Beispielen 1 und 2 aus der DE-A 32 20 384 hergestellt. Die Zusammensetzung der zugehörigen Monomergemische sowie der pH-Wert und der Feststoffgehalt der Dispersionen DV 1 und DV 2 ist ebenfalls in Tabelle 1 enthalten. Außerdem enthält Tabelle 1 die in der DE-A 32 20 384 angegebenen Glastemperaturen der zugehörigen Emulsionspolymerisate.

Tabelle 1

| % Monomere | D 1 | D 2 | DV 1 | DV 2 |
|---|---|---|---|---|
| 2-Ethylhexylacrylat | 78,4 | 49,0 | 91,6 | 73,3 |
| Methylmethacrylat | | | | 18,3 |
| 2-Hydroxyethylmethacrylat | | | 0,92 | 0,96 |
| Butandiol-(1,4)-dimethacrylat | | | 0,15 | |
| Styrol | 19,6 | 49,0 | | |
| Acrylsäure | | | 0,92 | |
| Methacrylsäure | | | 1,83 | 2,71 |
| Acrylamid | | | | 0,96 |
| Methacrylamid | | | 2,75 | 1,94 |
| 2-Acrylamido-2,2-dimethylethansulfonsäure | 2,0 | 2,0 | 1,83 | 1,83 |
| Glastemperatur (°C) | -36,7 | 2,5 | -66 | -33 |
| Feststoffgehalt ( Gew.%) | 62,1 | 63,2 | 60,8 | 60,2 |
| pH-Wert | 8 | 8 | 8 | 8 |

Beispiel 2

Prüfung verschiedener Kunstharzdispersionen auf Zementverträglichkeit

500 g Portlandzement PZ 35 F wurden mit 1500 g Normsand (DIN 1164 Teil 7) trocken gemischt und anschließend mit 325 g einer auf 15,5 Gew.% verdünnten wäßrigen Kunstharzdispersion angerührt. Unmittelbar nach Fertigstellung des dispersionshaltigen Zementmörtels sowie 15 und 30 min nach seiner Fertigstellung, wurde nach DIN 18 555 Teil 2 sein Ausbreitmaß bestimmt. Die Verträglichkeit der wäßrigen Kunstharzdispersion mit dem mineralischen Bindestoff ist um so größer, je langsamer das Ausbreitmaß des dispersionshaltigen Zementmörtels als Funktion der Zeit abfällt. Die Ergebnisse sind aus Tabelle 2 ersichtlich.

Tabelle 2

| Verwendete Dispersion | Ausbreitmaß | | |
|---|---|---|---|
| | sofort | nach 15 min | nach 30 min |
| D 1 | 27 | 28 | 27 |
| D 2 | 26 | 25 | 24 |
| DV 1 | 25 | 17 | 16 |
| DV 2 | 18 | 16 | 15 |

Beispiel 3

Das Erstarren verschiedener Bindebaustoffe

Als Maß für das Erstarren verschiedener Bindebaustoffe wurde das Erstarren zuschlagfreier wäßriger Bindemittelbreie untersucht. Die Untersuchung wurde nach der DIN 1164 Teil 5 mit dem Nadelgerät nach L.J. Vicat durchgeführt, wobei der Widerstand der zuschlagfreien wäßrigen Bindemittelbreie gegen das Eindringen einer zylindrischen Nadel mit einem Querschnitt von 1 $mm^2$ gemessen wurde. Der wäßrige Bindemittelbrei mußte nach dem Anmachen eine vorgeschriebene Konsistenz aufweisen, die man als Normsteife bezeichnet und die mit dem gleichen Gerät bestimmt wurde, wobei man die Nadel durch einen Tauchstab ersetzte.

Hierzu wurden 500 g Portlandzement PZ 35 F mit 100 g einer auf 50 Gew.% verdünnten wäßrigen Kunstharzdispersion angerührt. Anschließend wurde noch soviel Wasser zugesetzt, bis die Konsistenz der Normsteife entsprach. Der Beginn des Erstarrens ist der Zeitpunkt, zu dem die Nadel mit einem Gewicht von 300 g eine 40 mm hohe Breiprobe nicht mehr vollständig zu durchdringen vermochte und statt dessen 3 bis 5 mm über dem Boden der Probe steckenblieb. Das Ende des Erstarrens ist der Zeitpunkt, zu dem die Nadel höchstens 1 mm in die Probe eindrang. Die Ergebnisse enthält Tabelle 3. Der Zeitpunkt des Erstarrungsbeginns und des Erstarrungsendes sind vom Beginn des Anrührens an gerechnet. Tabelle 3 enthält zusätzlich die Ergebnisse für einen entsprechenden Zementbrei ohne Kunstharz. Hierzu wurde der Portlandzement PZ 35 F bis zur Konsistenz der Normsteife ausschließlich mit Wasser angerührt.

Tabelle 3

| Verwendete Dispersion | Erstarrungsbeginn | Erstarrungsende |
|---|---|---|
| D 1 | 4 h 10 min | 5 h 30 min |
| D 2 | 3 h 50 min | 5 h 00 min |
| DV 1 | 13 h 50 min | 19 h 10 min |
| DV 2 | 14 h 30 min | 20 h 20 min |
| ohne Kunstharz | 3 h 10 min | 4 h 10 min |

Beispiel 4

Bestimmung der Haftzugfestigkeit verschiedener dispersionshaltiger Bindebaustoffe auf Zementbasis

40 g Portlandzement PZ 35 F wurden mit 60 g Normsand (DIN 1164 Teil 7) trocken gemischt und anschließend mit 8 g einer auf 50 Gew.% verdünnten Kunstharzdispersion sowie 17 g Wasser angerührt. Der so erhaltene Zementmörtel wurde auf den aus Beton bestehenden Untergrund aufgetragen und anschließend wurden in die Mörtelschicht Steinzeugfliesen (Mosaikfliesen 5 x 5 cm) eingelegt. Danach wurden die erhaltenen Prüfbeläge waagrecht 14 Tage bei 23 °C und 50 % relativer Luftfeuchtigkeit (Normalklima), beziehungsweise 2 Tage bei Normalklima und danach 12 Tage bei 23 °C in Wasser, gelagert. Auf die Keramikfliesen wurden dann die zu einem handelsüblichen Zuggerät (Firma Herion) gehörenden Zuganker aufgeklebt und nach dem Erhärten des Klebstoffes mit Hilfe des Zuggerätes gemeinsam mit den Keramikfliesen abgezogen. Aus der Bruchlast wurden jeweils die in Tabelle 4 befindlichen Haftzugfestigkeiten ermittelt.

Tabelle 4

| Verwendete Dispersion | Haftzugfestigkeit ($N/mm^2$) | |
|---|---|---|
| | 14 d Normalklima | 2 d Normalklima u. 12 d naß |
| D 1 | 1,5 | 1,8 |
| D 2 | 2,1 | 2,0 |
| DV 1 | 0,9 | 0,9 |
| DV 2 | 1,0 | 1,3 |

Beispiel 5

Bestimmung der Festigkeit gegen dynamische Beanspruchungen

Als Maß für die Festigkeit gegen dynamische Beanspruchungen wurden für Zementmörtel mit Zusammensetzungen gemäß Beispiel 2 die Druck- und Biegezugfestigkeit nach DIN 1164 Teil 7 bestimmt. Die Prüfung erfolgte an Mörtelprismen (4 x 4 x 16 cm). Die Mörtelbestandteile wurden unter den normgemäßen Bedingungen in einem Mischer gemischt, in eine Prismenform eingefüllt und durch Vibrieren verdichtet. Anschließend wurden die Mörtelprismen in der Form einen Tag bei 23 °C und 95 % relativer Luftfeuchtigkeit und danach entformt noch 27 Tage bei derselben Temperatur unter Wasser gelagert. Nach der Entnahme aus dem Wasser wurden die Prismen auf ihre Biegezug- und Druckfestigkeit geprüft. Die

Ergebnisse enthält Tabelle 5.

Tabelle 5

| Verwendete Dispersion | Biegezugfestigkeit ($N/mm^2$) | Druckfestigkeit ($N/mm^2$) |
|---|---|---|
| D 1 | 6,7 | 28 |
| D 2 | 6,6 | 30 |
| DY 1 | 4,5 | 21 |
| DY 2 | 5,5 | 21 |

## Ansprüche

1. Wäßrige Kunstharzdisperionen, erhältlich durch Emulsionspolymerisation von

a) 35 bis 90 Gew.% eines Esters aus einer $\alpha,\beta$-ethylenisch ungesättigten Carbonsäure mit bis zu 5 C-Atomen und einem $C_1$- bis $C_{12}$-Alkanol oder eines Gemisches solcher Ester (Monomere I),

b) 5 bis 60 Gew.% Styrol und/oder Vinyltoluolen (Monomere II),

c) 1 bis 5 Gew.% mindestens einer olefinisch ungesättigten Sulfonsäure der allgemeinen Formel III (Monomere III)

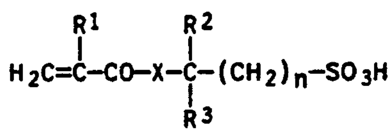 (III)

in der die Variablen folgende Bedeutung haben:
n 0 bis 10
$R^1$ bis $R^3$ Wasserstoff oder die Methylgruppe
x Sauerstoff oder die Iminogruppe
und

d) 0 bis 5 Gew.% sonstigen copolymerisierbaren Monomeren (Monomere IV),
wobei die Gewichtsanteile der Monomeren I, II und IV innerhalb der angegebenen Grenzen so gewählt sind, daß ein nur aus diesen Monomeren aufgebautes Polymerisat eine Glastemperatur von -50 bis +20 °C aufweisen würde.

2. Wäßrige Kunstharzdispersionen nach Anspruch 1, erhältlich unter Verwendung von n-Butylacrylat, n-Hexylacrylat oder 2-Ethylhexylacrylat als Monomere I.

3. Wäßrige Kunstharzdispersionen nach Anspruch 1 oder 2, erhältlich unter Verwendung von Styrol als Monomerem II.

4. Wäßrige Kunstharzdispersionen nach den Ansprüchen 1 bis 3, erhältlich unter Verwendung von 2-Acrylamido-2,2-dimethylethansulfonsäure als Monomerem III.

5. Wäßrige Kunstharzdispersionen nach den Ansprüchen 1 bis 4, dadurch erhältlich, daß man die Gewichtsanteile der Monomeren I, II und IV so wählt, daß ein nur aus diesen Monomeren aufgebautes Polymerisat eine Glastemperatur von -50 bis -20 °C aufweisen würde.

6. Verfahren zur Herstellung von wäßrigen Kunstharzhdispersionen gemäß den Ansprüchen 1 bis 5, dadurch gekennzeichnet, daß man

a) 35 bis 90 Gew.% eines Esters aus einer $\alpha,\beta$-ethylenisch ungesättigten Carbonsäure mit bis zu 5 C-Atomen und einem $C_1$- bis $C_{12}$-Alkanol oder eines Gemisches solcher Ester (Monomere I),

b) 5 bis 60 Gew.% Styrol und/oder Vinyltoluole (Monomere II),

c) 1 bis 5 Gew.% mindestens einer olefinisch ungesättigten Sulfonsäure der allgemeinen Formel III (Monomere III)

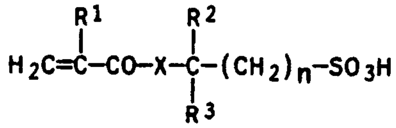 (III)

in der die Variablen folgende Bedeutung haben:
n 0 bis 10
$R^1$ bis $R^3$ Wasserstoff oder die Methylgruppe
x Sauerstoff oder die Iminogruppe
und

d) 0 bis 5 Gew.% sonstige copolymerisierbare Monomere (Monomere IV) in wäßrigem Medium unter den bekannten Bedingungen der Emulsionspolymerisation polymerisiert, wobei die Gewichtsanteile der Monomeren I, II und IV innerhalb der angegebenen Grenzen so gewählt sind, daß ein nur aus diesen Monomeren aufgebautes Polymerisat eine Glastemperatur von -50 bis +20 °C aufweisen würde.

7. Verwendung der Kunstharzdispersionen gemäß den Ansprüchen 1 bis 5 als Zusatzmittel in mineralischen Bindebaustoffen.

8. Verwendung der Kunstharzdispersionen gemäß den Ansprüchen 1 bis 5 als Zusatzmittel für Bindebaustoffe auf Zementbasis.

Patentansprüche für folgenden Vertragsstaat : ES

1. Verfahren zur Herstellung von wäßrigen Kunstharzhdispersionen, dadurch gekennzeichnet, daß man

a) 35 bis 90 Gew.% eines Esters aus einer $\alpha,\beta$-ethylenisch ungesättigten Carbonsäure mit bis zu 5 C-Atomen und einem $C_1$- bis $C_{12}$-Alkanol oder eines Gemisches solcher Ester (Monomere I),

b) 5 bis 60 Gew.% Styrol und/oder Vinyltoluole (Monomere II),

c) 1 bis 5 Gew.% mindestens einer olefinisch ungesättigten Sulfonsäure der allgemeinen Formel III (Monomere III)

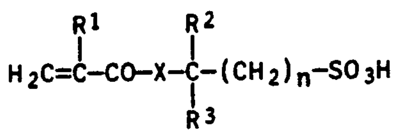 (III)

in der die Variablen folgende Bedeutung haben:
n 0 bis 10
$R^1$ bis $R^3$ Wasserstoff oder die Methylgruppe
x Sauerstoff oder die Iminogruppe
und

d) 0 bis 5 Gew.% sonstige copolymerisierbare Monomere (Monomere IV) in wäßrigem Medium unter den bekannten Bedingungen der Emulsionspolymerisation polymerisiert, wobei die Gewichtsanteile der Monomeren I, II und IV innerhalb der angegebenen Grenzen so gewählt sind, daß ein nur aus diesen Monomeren aufgebautes Polymerisat eine Glastemperatur von -50 bis +20 °C aufweisen würde.

2. Verfahren zur Herstellung von wäßrigen Kunstharzdispersionen nach Anspruch 1, dadurch gekennzeichnet, daß als Monomere I n-Butylacrylat, n-Hexylacrylat oder 2-Ethylhexylacrylat eingesetzt werden.

3. Verfahren zur Herstellung von wäßrigen Kunstharzdispersionen nach Anspruch 1 oder 2, dadurch gekennzeichnet, daß als Monomeres II Styrol eingesetzt wird.

4. Verfahren zur Herstellung von wäßrigen Kunstharzdispersionen nach den Ansprüchen 1 bis 3, dadurch gekennzeichnet, daß als Monomeres III 2-Acrylamido-2,2-dimethylsulfonsäure eingesetzt wird.

5. Verfahren zur Herstellung von wäßrigen Kunstharzdispersionen nach den Ansprüchen 1 bis 4, dadurch gekennzeichnet, daß man die Gewichtsanteile der Monomeren I, II und IV so wählt, daß ein nur aus diesen Monomeren aufgebautes Polymerisat eine Glastemperatur von -50 bis -20 °C aufweisen würde.

6. Verwendung der nach einem Verfahren gemäß der Ansprüche 1 bis 5 erhaltenen Verfahrensprodukte als Zusatzmittel in mineralischen Bindebaustoffen.

7. Verwendung der nach einem Verfahren gemäß der Ansprüche 1 bis 5 erhaltenen Verfahrensprodukte als Zusatzmittel für Bindebaustoffe auf Zementbasis.